# EUROPÄISCHE PATENTSCHRIFT

(11) **EP 2 529 922 B1**
(45) Veröffentlichungstag und Bekanntmachung des Hinweises auf die Patenterteilung: **27.03.2019**
(21) Anmeldenummer: 11168282.9
(22) Anmeldetag: 31.05.2011
(51) Int. Cl.: B30B 1/26, F16H 3/34

(54) **Antriebseinrichtung für einen Press-, Stanz- oder Umformautomaten**
Drive device for a press, die cutter or moulding machine
Dispositif d'actionnement pour un automate de presse, de découpe ou de déformage

(43) Veröffentlichungstag der Anmeldung: 05.12.2012
(73) Patentinhaber: Haulick + Roos GmbH, 75175 Pforzheim (DE)
(72) Erfinder: Siegel, Andreas, 75443 Ötisheim (DE)
(74) Vertreter: Hoeger, Stellrecht & Partner Patentanwälte mbB

(56) Entgegenhaltungen:
- EP-A1- 2 008 800
- EP-A2- 2 228 203
- CH-A- 205 621
- JP-U- 55 077 600
- US-A1- 2010 089 258

## Beschreibung

Die Erfindung betrifft eine Antriebseinrichtung für einen Press-, Stanz- oder Umformautomaten mit den Merkmalen des Oberbegriffes von Patentanspruch 1.

Mit Hilfe derartiger Antriebseinrichtungen kann die Exzenterwelle eines Press-, Stanz- oder Umformautomaten in Drehung versetzt werden. An der Exzenterwelle ist üblicherweise mindestens ein Pleuel gelagert, das mit einem Stößel verbunden ist und die Drehbewegung der Exzenterwelle in eine Translationsbewegung des Stößels wandelt. Der Stößel kann dadurch zu einer Hin- und Herbewegung relativ zu einem Tisch des Press-, Stanz- oder Umformautomaten angetrieben werden. Am Stößel und am Tisch können miteinander zusammenwirkende Werkzeuge gehalten werden zur Bearbeitung eines Werkstückes. Das Werkstück kann beispielsweise geprägt, gestanzt oder umgeformt werden.

In vielen Fällen ist es wünschenswert, die Drehzahl der Exzenterwelle zu verändern. Hierzu wird in der DE 20 2006 013440 U1 ein Schaltgetriebe mit zwei Schaltstufen vorgeschlagen, bei dem an einer ersten Getriebewelle zwei antriebsseitige Zahnräder drehbar gelagert sind, die permanent mit jeweils einem abtriebsseitigen Zahnrad in Eingriff stehen. Die abtriebsseitigen Zahnräder sind an einer zweiten Getriebewelle drehfest gehalten, die über ein Planetengetriebe mit der Exzenterwelle des Press-, Stanz- oder Umformautomaten gekoppelt ist. Die erste Getriebewelle ist drehfest mit der Motorwelle des Antriebsmotors verbunden und mit Hilfe hydraulischer Lamellenkupplungen kann wahlweise eines der beiden antriebsseitigen Zahnräder mit der ersten Getriebewelle drehfest verbunden werden. Dies gibt die Möglichkeit, den Antriebsmotor wahlweise über eines der beiden antriebsseitigen Zahnräder mit der Exzenterwelle zu koppeln. Eine derartige Ausgestaltung hat sich in der Praxis bewährt. Allerdings ist der Einsatz der Lamellenkupplungen mit einer nicht vernachlässigbaren Wärmeentwicklung verbunden sowie mit einem nicht unerheblichen Trägheitsmoment. Schaltkupplungen, die mit einem wechselnden Drehmoment belastet werden, müssen stabil dimensioniert werden und haben dadurch eine hohe Massenträgheit.

In der EP 2 008 800 A1 wird eine Antriebseinrichtung der eingangs genannten Art vorgeschlagen, bei der alternativ entweder ein erstes antriebsseitiges Zahnrad oder ein zweites antriebsseitiges Zahnrad mit einem abtriebsseitigen Zahnrad in Eingriff steht. Die beiden antriebsseitigen Zahnräder sind drehfest an einer Schiebehülse gelagert, die ihrerseits drehfest aber axial verschieblich an einer ersten Getriebewelle gehalten ist. Durch eine axiale Verschiebung der Schiebehülse kann wahlweise das erste antriebsseitige Zahnrad oder das zweite antriebsseitige Zahnrad mit einem abtriebsseitigen Zahnrad in Eingriff gebracht werden. Durch den Einsatz der Schiebehülse können Lamellenkupplungen entfalten. Dies hat den Vorteil, dass die Wärmeentwicklung der Antriebseinrichtung reduziert werden kann. Auch das Trägheitsmoment ist bei der aus EP 2 008 800 A1 bekannten Antriebseinrichtung geringer als bei der Antriebseinrichtung, die in DE 20 2006 013440 U1 offenbart ist. Allerdings bildet die Schiebehülse eine spielbehaftete Stelle im Antriebsstrang, die möglichst vermieden werden sollte. Eine weitere Reduktion des Trägheitsmomentes wäre hilfreich, um die Dynamik der Antriebseinrichtung zu verbessern.

Aus der Veröffentlichung CH 205 621 A ist ein Wechselgetriebe bekannt, bei dem an einer Motorwelle ein erstes Zahnrad und ein zweites Zahnrad drehfest gehalten sind, die alternativ mit einem dritten Zahnrad in Eingriff gelangen können, das an einer Getriebewelle drehfest gehalten ist. Die Motorwelle ist exzentrisch in einer Hülse gelagert, die ihrerseits drehbar und axial verschiebbar in einem Gehäuseteil gelagert ist. Für einen Schaltvorgang kann die Motorwelle zusammen mit dem daran festgelegten Motor und der Hülse in Richtung und parallel zur Richtung der Motorwelle verstellt werden.

Aufgabe der vorliegenden Erfindung ist es, eine Antriebseinrichtung der gattungsgemäßen Art derart weiterzubilden, dass sie ein verringertes Trägheitsmoment aufweist und ein Schaltvorgang einfacher durchgeführt werden kann.

Diese Aufgabe wird durch eine Antriebseinrichtung der mit den Merkmalen von Patentanspruch 1 gelöst.

Bei der erfindungsgemäßen Antriebseinrichtung erfolgt der Übergang aus einer ersten Schaltstufe in eine zweite Schaltstufe des Schaltgetriebes dadurch, dass der Antriebsmotor zusammen mit dem ersten Getriebeabschnitt aus einer ersten Koppelstellung in eine zweite Koppelstellung bewegt wird. In der ersten Koppelstellung steht das erste Zahnrad mit einem dritten Zahnrad des Schaltgetriebes in Eingriff und in der zweiten Koppelstellung steht das zweite Zahnrad mit dem dritten Zahnrad in Eingriff. Zusätzliche bewegliche Schaltglieder, wie sie bei üblichen Antriebseinrichtungen beispielsweise in Form von Lamellenkupplungen oder Schiebehülsen zum Einsatz kommen, können bei der erfindungsgemäßen Antriebseinrichtung entfallen. Der Übergang von einer ersten Schaltstufe in eine zweite Schaltstufe erfolgt bei der erfindungsgemäßen Antriebseinrichtung im Stillstand. Der Antriebsmotor bildet in Kombination mit dem ersten Getriebeabschnitt eine Antriebseinheit, die zwischen der ersten und der zweiten Koppelstellung hin- und her bewegt werden kann. Dies hat eine beträchtliche Reduktion des Trägheitsmomentes der Antriebseinrichtung zur Folge, so dass sich die Antriebseinrichtung durch eine sehr hohe Dynamik auszeichnet. Auch die Wärmeentwicklung kann verhältnismäßig gering gehalten werden. Die erfindungsgemäße Antriebseinrichtung zeichnet sich daher auch durch eine sehr gute Energieeffizienz aus. Im Vergleich zu bekannten Antriebseinrichtungen, bei denen bewegliche Schaltglieder zum Einsatz kommen, zeichnet sich die erfindungsgemäße Antriebseinrichtung auch durch einen optimierten Kraftfluss von der Motorwelle auf die Exzenterwelle aus, denn bewegliche Schaltglieder sind zwangsweise spielbehaftet. Derartige bewegliche Schaltglieder können jedoch bei der erfindungsgemäßen Antriebseinrichtung entfallen. Der Wegfall beweglicher Schaltglieder hat darüber hinaus den Vorteil, dass die Lebensdauer der Antriebseinrichtung verbessert ist.

Die reduzierte Massenträgheit der erfindungsgemäßen Antriebseinrichtung hat zur Folge, dass zum Beschleunigen und Abbremsen der Exzenterwelle weniger Energie erforderlich ist. Es können daher kleinere Antriebsmotoren zum Einsatz kommen. Die Verlustleistung kann reduziert werden und dadurch kann insgesamt der Wirkungsgrad der Antriebseinrichtung erheblich verbessert werden.

Die Antriebseinheit ist elektrisch, pneumatisch und/oder hydraulisch bewegbar. Es kann beispielsweise vorgesehen sein, dass die Antriebseinheit mittels Linearmotoren zwischen der ersten und der zweiten Koppelstellung hin- und her bewegt werden kann. Alternativ oder ergänzend kann mindestens ein Kolben-Zylinderaggregat zum Einsatz kommen, mit dessen Hilfe die Antriebseinheit relativ zum dritten Zahnrad des Schaltgetriebes bewegt werden kann.

Gemäß der Erfindung ist die Drehwinkelstellung des ersten und des zweiten Zahnrads steuerbar. Die Steuerbarkeit der Drehwinkelstellungen des ersten und des zweiten Zahnrades ermöglicht es, das erste Zahnrad und das zweite Zahnrad in eine Drehwinkelstellung zu überführen, in der sichergestellt ist, das die Zähne des ersten Zahnrades bzw. des zweiten Zahnrades in die Zahnzwischenräume des dritten Zahnrades eintauchen, wenn sich das erste Zahnrad bzw. das zweite Zahnrad dem dritten Zahnrad nähert.

Die Steuerung der Drehwinkelstellung des ersten und des zweiten Zahnrades kann beispielsweise dadurch erfolgen, dass die Drehwinkelstellungen der beiden Zahnräder mittels eines Sensors erfassbar sind, wobei der Sensor mit einer Steuereinheit in Verbindung steht, die durch einen Vergleich der erfassten Ist-Stellung mit einer gewünschten Sollstellung den Antriebsmotor derart ansteuert, dass das erste Zahnrad bzw. das zweite Zahnrad in die gewünschte Drehwinkelstellung überführt wird.

Die Bewegung der Antriebseinheit zwischen der ersten und der zweiten Koppelstellung erfolgt bei einer vorteilhaften Ausführungsform in separaten, insbesondere aufeinander folgenden Bewegungsschritten in radialer und axialer Richtung bezogen auf die Längsachse der ersten Getriebewelle. Es kann beispielsweise vorgesehen sein, dass das erste, das zweite und das dritte Zahnrad als Stirnräder ausgebildet sind mit über den Umfang gleichmäßig verteilten Zähnen. In einer ersten Koppelstellung kann das erste Zahnrad mit dem dritten Zahnrad in Eingriff stehen, wobei das Schaltgetriebe eine erste Schaltstufe einnimmt. Der Übergang in eine zweite Schaltstufe kann dadurch erfolgen, dass die Antriebseinheit zunächst so weit in radialer Richtung bewegt wird, dass das erste Zahnrad mit dem dritten Zahnrad außer Eingriff steht. Dann kann die Antriebseinheit so weit in axialer Richtung bewegt werden, dass anschließend durch eine erneute radiale Bewegung das zweite Zahnrad mit dem dritten Zahnrad in Eingriff gelangt. Das Schaltgetriebe nimmt dann seine zweite Schaltstufe ein. Der Schaltvorgang zurück in die erste Schaltstufe erfolgt in umgekehrter Reihenfolge.

Bei einer besonders bevorzugten Ausführungsform der erfindungsgemäßen Antriebseinrichtung ist die Antriebseinheit bezogen auf die Längsachse der ersten Getriebewelle axial verschiebbar und um eine parallel zur ersten Getriebewelle ausgerichtete Schwenkachse verschwenkbar. Der Übergang zwischen den beiden Koppelstellungen erfolgt bei einer derartigen Ausführungsform über eine axiale Bewegung und eine Schwenkbewegung der kompletten Antriebseinheit. Die Schwenkbewegung ermöglicht es auf konstruktiv einfache Weise, wahlweise das erste Zahnrad oder das zweite Zahnrad mit dem dritten Zahnrad in Eingriff zu bringen, nachdem das erste Zahnrad bzw. das zweite Zahnrad zuvor mittels einer axialen Bewegung seitlich neben dem dritten Zahnrad positioniert wurde.

Es kann beispielsweise vorgesehen sein, dass die Antriebseinheit eine Konsole aufweist, an der der Antriebsmotor gehalten ist, wobei die Konsole um die Schwenkachse verschwenkbar und kollinear zur Schwenkachse verschiebbar ist.

Die Konsole kann beispielsweise in Form eines Halteschlittens ausgestaltet sein, der an einem Führungselement linear verschiebbar und um die Schwenkachse verschwenkbar ist.

Der Halteschlitten kann zum Beispiel eine Tragplatte aufweisen, auf der der Antriebsmotor aufsitzt und die vorzugsweise drehfest an einer kollinear zur Schwenkachse ausgerichteten und um die Schwenkachse verschwenkbaren Führungsstange gehalten ist.

Von besonderem Vorteil ist es, wenn der Halteschlitten an zwei Führungsstangen gehalten ist, die parallel zueinander ausgerichtet sind, wobei die erste Führungsstange die Schwenkachse des Halteschlittens definiert und an der zweiten Führungsstange Antriebsglieder zum Verschwenken der Halteschlittens angreifen. Die Antriebsglieder können beispielsweise in Form von Kolben-Zylinderaggregaten ausgestaltet sein.

Günstig ist es, wenn die Antriebseinheit bezogen auf die erste Getriebewelle in axialer Richtung zwischen einer vorderen und einer hinteren Axialstellung hin und her bewegbar ist, wobei der vorderen und/oder der hinteren Axialstellung mindestens ein Lagesensor zugeordnet ist. Mittels der Lagesensoren kann die Position der Antriebseinheit in der vorderen und/oder in der hinteren Axialstellung erfasst werden. Die Lagesensoren ermöglichen es somit, einer Steuereinheit ein Signal bereitzustellen, das anzeigt, dass die Antriebseinheit die vordere bzw. die hintere Axialstellung eingenommen hat. Als Lagesensor kann beispielsweise ein Näherungssensor zum Einsatz kommen. Derartige Näherungssensoren sind dem Fachmann an sich bekannt.

Bei einer vorteilhaften Ausführungsform ist die Antriebseinheit um eine parallel zur ersten Getriebewelle ausgerichtete Schwenkachse zwischen einer inneren und einer äußeren Schwenkstellung hin und her schwenkbar, wobei zumindest einer Schwenkstellung ein Lagesensor zugeordnet ist. Mittels des Lagesensors kann einer Steuereinheit ein Sensorsignal bereitgestellt werden, das anzeigt, dass die Antriebseinheit eine bestimmte Schwenkstellung eingenommen hat.

Von besonderem Vorteil ist es, wenn die Antriebseinheit erst dann in axialer Richtung bewegbar ist, nachdem sie ihre äußere Schwenkstellung eingenommen hat. Durch eine derartige Ausgestaltung ist sichergestellt, dass weder das erste Zahnrad noch das zweite Zahnrad bei einer Axialbewegung der Antriebseinheit mit dem dritten Zahnrad kollidieren kann. Aufgrund der Schwenkbewegung in die äußere Schwenkstellung ist vielmehr sichergestellt, dass sowohl das erste Zahnrad als auch das zweite Zahnrad einen derartigen Abstand zum dritten Zahnrad einnehmen, dass bei einer nachfolgenden Axialbewegung keinerlei Kollisionsgefahr besteht.

Von besonderem Vorteil ist es, wenn der Antriebsmotor ein Servo- oder Torquemotor ist. Dies erlaubt es auf konstruktive einfache Weise, die Drehzahl des Antriebsmotors während einer Umdrehung der Exzenterwelle zu verändern. Dies gibt die Möglichkeit, dem mit der Exzenterwelle verbundenen Stößel einen bezogen auf den unteren Totpunkt unsymmetrischen Geschwindigkeitsverlauf zu verleihen. Bei einer Abwärtsbewegung kann sich der Stößel mit relativ langsamer Geschwindigkeit dem unteren Totpunkt annähern, und nach Durchlaufen des unteren Totpunktes kann er eine verhältnismäßig schnelle Aufwärtsbewegung ausführen. Somit kann zum Einen eine verhältnismäßig geringe Umformgeschwindigkeit erzielt werden, um eine hohe Bearbeitungsqualität zu erzielen, zum Anderen kann eine hohe Ausbringungsmenge des Press-, Stanz- oder Umformautomaten erreicht werden, so dass innerhalb verhältnismäßig kurzer Zeit eine große Anzahl von Werkstücken bearbeitet werden können. Eine winkelgenaue Steuerung der Drehzahl der Exzenterwelle ist insbesondere mittels Servo- und Torquemotoren erzielbar. Torquemotoren haben den Vorteil, dass sie bei verhältnismäßig geringer Drehzahl ein hohes Drehmoment bereitstellen. Bei vergleichbarer Leistung kann von Torquemotoren ein doppelt so großes Drehmoment bereitgestellt werden als von Servomotoren. Bei beiden Motorarten kann die Drehzahl drehwinkelgenau elektronisch variiert werden. Hierzu kann eine elektrische Steuereinheit zum Einsatz kommen.

Die erste Getriebewelle ist günstigerweise fluchtend zur Motorwelle ausgerichtet und mit dieser drehfest verbunden. Die drehfeste Verbindung kann starr ausgebildet sein oder auch mit Hilfe einer Kupplung.

Das erste und das zweite Zahnrad können an der ersten Getriebewelle drehfest gehalten sein. Insbesondere kann vorgesehen sein, dass das erste Zahnrad und/oder das zweite Zahnrad an die erste Getriebewelle angeformt ist.

Zusätzlich zu dem ersten Getriebeabschnitt, der zusammen mit dem Antriebsmotor zwischen der ersten und der zweiten Koppelstellung hin- und her bewegbar ist, umfasst das Schaltgetriebe bei einer bevorzugten Ausführungsform der Erfindung einen zweiten Getriebeabschnitt mit einer zweiten Getriebewelle, an der das dritte Zahnrad gehalten ist.

Vorteilhafterweise ist der erste Getriebeabschnitt zusammen mit dem Antriebsmotor an einem Maschinenkörper des Press-, Stanz- oder Umformautomaten beweglich gehalten, wohingegen der zweite Getriebeabschnitt am Maschinenkörper bevorzugt ortsfest gehalten ist.

An der zweiten Getriebewelle ist bei einer vorteilhaften Ausführungsform der Erfindung ein viertes Zahnrad gehalten, das mit einem drehfest mit der Exzenterwelle verbundenen fünften Zahnrad in Eingriff steht.

Alternativ kann das dritte Zahnrad auch direkt mit einem drehfest mit der Exzenterwelle verbundenen Zahnrad in Eingriff stehen. In diesem Fall kann vorgesehen sein, dass die zweite Getriebewelle nur das dritte Zahnrad trägt.

Die zweite Getriebewelle ist günstigerweise parallel zur ersten Getriebewelle und/oder parallel zur Exzenterwelle ausgerichtet. Insbesondere kann vorgesehen sein, dass die erste Getriebewelle, die zweite Getriebewelle und die Exzenterwelle parallel zueinander ausgerichtet sind.

Der zweite Getriebeabschnitt umfasst günstigerweise eine Bremse zum Arretieren der zweiten Getriebewelle.

Von besonderem Vorteil ist es, wenn die Antriebseinrichtung eine Trockenbremse aufweist.

Die Bremse ist günstigerweise an der zweiten Getriebewelle angeordnet.

Die nachfolgende Beschreibung einer bevorzugten Ausführungsform der Erfindung dient im Zusammenhang mit der Zeichnung der näheren Erläuterung. Es zeigen:

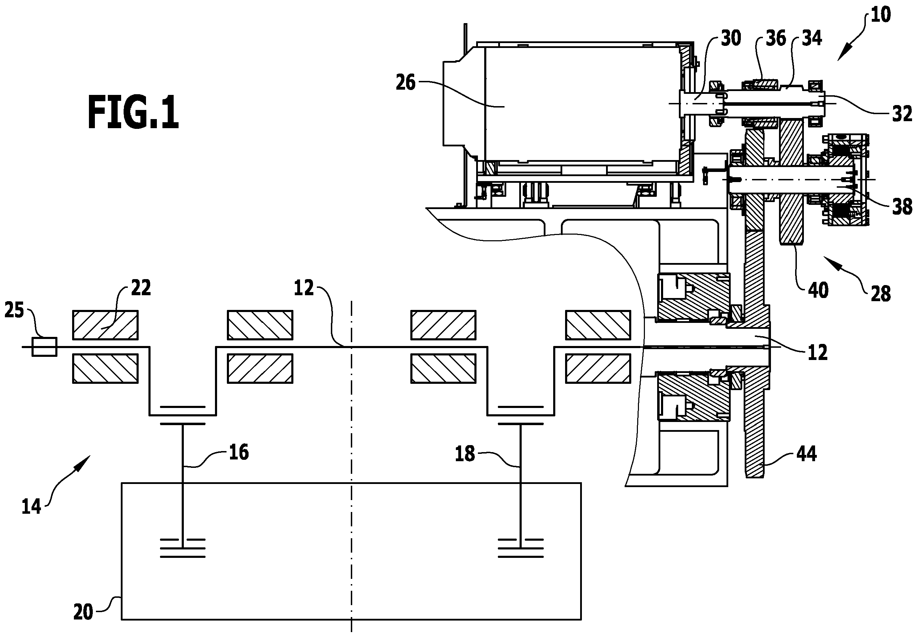

- Figur 1:: eine schematische Darstellung einer erfindungsgemäßen Antriebseinrichtung, die mit einer Exzenterwelle eines Press-, Stanz- oder Umformautomaten gekoppelt ist;
- Figur 2:: eine vergrößerte Darstellung der Antriebseinrichtung aus Figur 1 in einer ersten Schaltstufe;
- Figur 3:: eine vergrößerte Darstellung der Antriebseinrichtung aus Figur 1 in einer zweiten Schaltstufe;
- Figur 4:: eine Schnittansicht längs der Linie 4-4 in Figur 2;
- Figur 5:: eine perspektivische Darstellung der Antriebseinrichtung aus Figur 1 schräg von oben und
- Figur 6:: eine perspektivische Darstellung der Antriebseinrichtung aus Figur 1 schräg von unten.

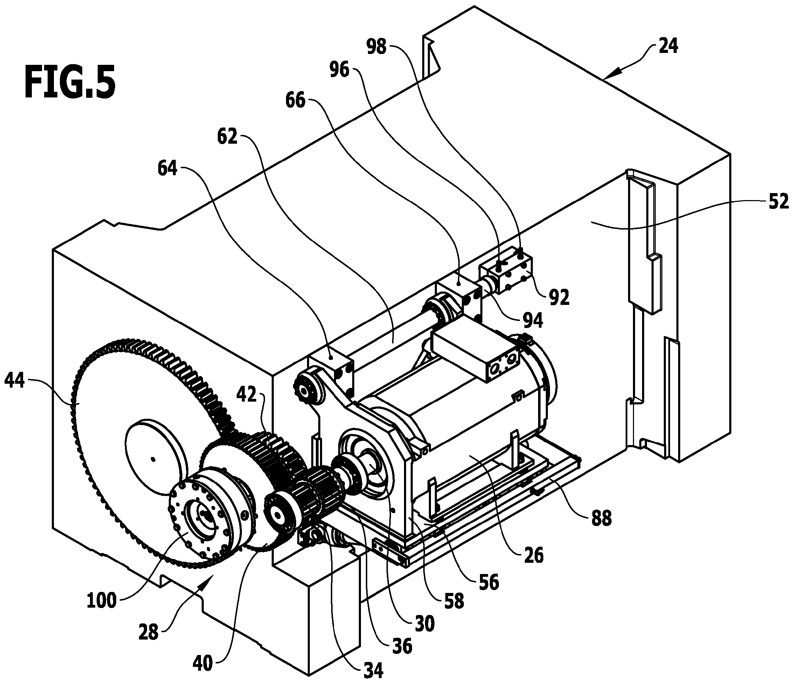

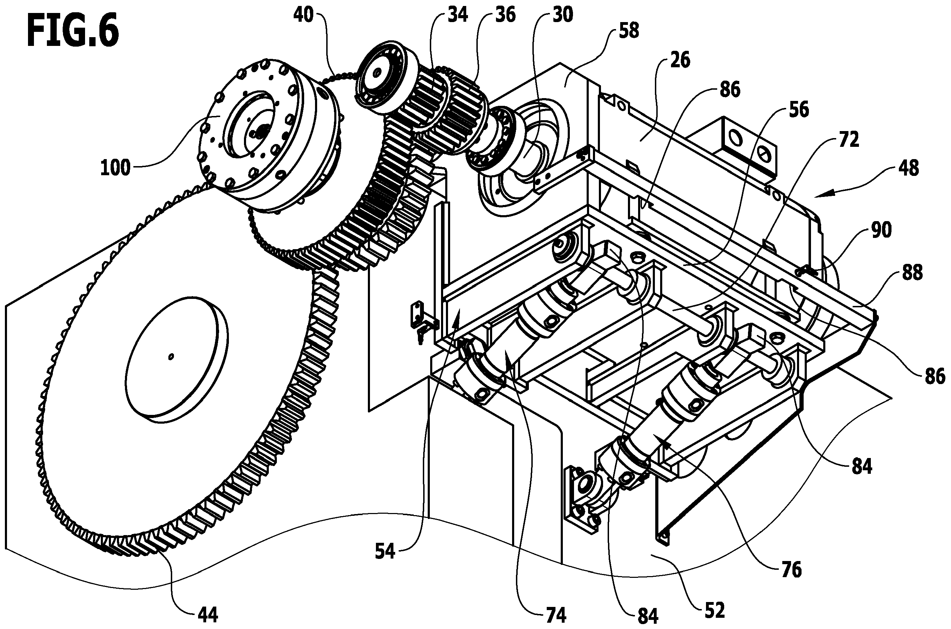

In der Zeichnung ist schematisch eine bevorzugte Ausführungsform einer erfindungsgemäßen Antriebseinrichtung 10 dargestellt, mit deren Hilfe eine Exzenterwelle 12 eines nur teilweise dargestellten Press-, Stanz- oder Umformautomaten 14 in Drehung versetzt werden kann. Die Exzenterwelle 12 ist in üblicher Weise über Pleuel 16, 18 mit einem Stößel 20 verbunden, der von der Exzenterwelle 12 zu einer Hin- und Herbewegung angetrieben werden kann. Die Exzenterwelle 12 ist mit Hilfe von Wälz- oder Gleitlagern 22 an einem Maschinenkörper 24 drehbar gelagert, der in den Figuren 5 und 6 dargestellt ist.

Die Antriebseinrichtung 10 umfasst einen Servomotor 26. Alternativ könnte auch ein Torquemotor zum Einsatz kommen. Der Servomotor 26 wird von einer in der Zeichnung nicht dargestellten Steuereinheit gesteuert, die beispielsweise in einem Schaltschrank angeordnet und über in der Zeichnung nicht dargestellte elektrische Leitungen mit dem Servomotor 26 verbunden ist.

Die Drehstellung der Exzenterwelle 12 kann mittels eines Drehwinkelsensors 25 erfasst werden, der über eine in der Zeichnung nicht dargestellte Sensorleitung ebenfalls mit der Steuereinheit in Verbindung steht.

Der Servomotor 26 steht über ein Schaltgetriebe 28 der Antriebseinrichtung 10 mit der Exzenterwelle 12 in Drehverbindung. Der Servomotor 26 umfasst eine Motorwelle 30. Fluchtend zur Motorwelle 30 ist eine erste Getriebewelle 32 des Schaltgetriebes 28 ausgerichtet, die mit der Motorwelle 30 drehfest verbunden ist. Die erste Getriebewelle 32 trägt ein erstes Zahnrad 34 und ein zweites Zahnrad 36, die mit der ersten Getriebewelle 32 drehfest verbunden sind.

Zusätzlich zur ersten Getriebewelle 32 umfasst das Schaltgetriebe 28 eine zweite Getriebewelle 38, die parallel zur ersten Getriebewelle 32 und auch parallel zur Exzenterwelle 12 ausgerichtet ist. Die zweite Getriebewelle trägt ein drittes Zahnrad 40 und ein viertes Zahnrad 42, die mit der zweiten Getriebewelle 38 drehfest verbunden sind.

Das vierte Zahnrad 42 steht permanent mit einem fünften Zahnrad 44 in Eingriff, das drehfest mit der Exzenterwelle 12 verbunden ist.

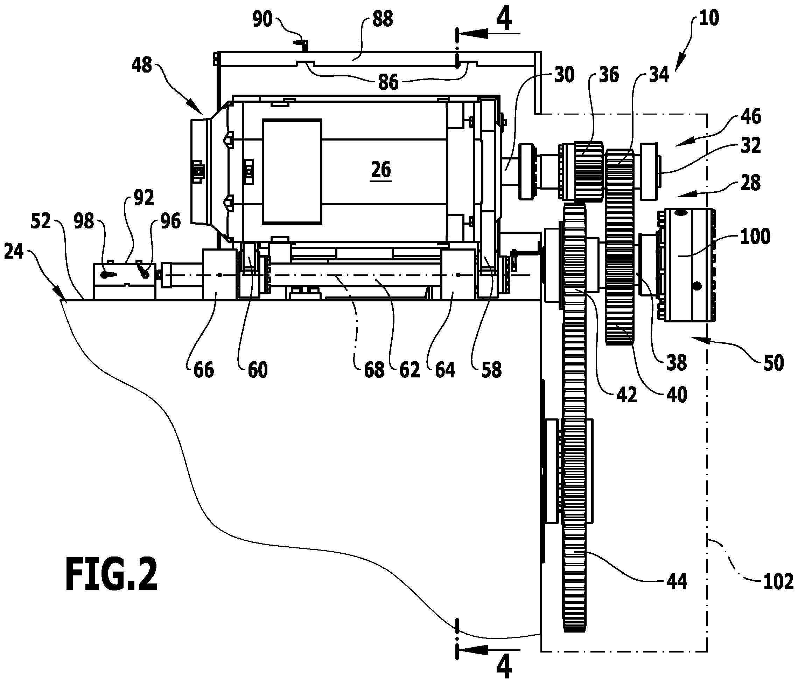

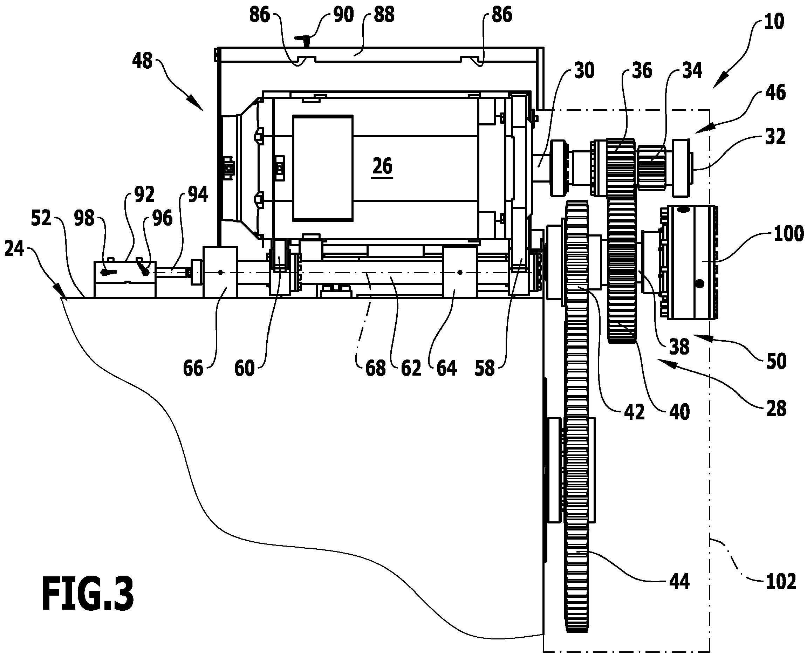

Das Schaltgetriebe 28 kann eine erste, in Figur 2 dargestellte Schaltstufe und eine zweite, in Figur 3 dargestellte Schaltstufe einnehmen. In der ersten Schaltstufe steht das erste Zahnrad 34 mit dem dritten Zahnrad 40 in Eingriff, und in der zweiten Schaltstufe steht das zweite Zahnrad 36 mit dem dritten Zahnrad 40 in Eingriff. In der ersten Schaltstufe ist der Servomotor 26 über das erste Zahnrad 34, das dritte Zahnrad 40, das vierte Zahnrad 42 und das fünfte Zahnrad 44 mit der Exzenterwelle 12 gekoppelt. In der zweiten Schaltstufe ist der Servomotor 26 über das zweite Zahnrad 36, das dritte Zahnrad 40, das vierte Zahnrad 42 und das fünfte Zahnrad 44 mit der Exzenterwelle 12 gekoppelt.

Der Übergang zwischen der ersten Schaltstufe und der zweiten Schaltstufe erfolgt bei der Antriebseinrichtung 10 dadurch, dass der Servomotor 26 zusammen mit der ersten Getriebewelle 32 und dem ersten Zahnrad 34 und dem zweiten Zahnrad 36 aus einer ersten Koppelstellung, in der das Schaltgetriebe 28 die erste Schaltstufe einnimmt, in eine zweite Koppelstellung bewegt wird, in der das Schaltgetriebe 28 die zweite Schaltstufe einnimmt. Das Schaltgetriebe 28 weist somit einen ersten Getriebeabschnitt 46 auf, der in Kombination mit dem Servomotor 26 eine Antriebseinheit 48 ausbildet und relativ zu einem zweiten Getriebeabschnitt 50 bewegt werden kann.

In der dargestellten Ausführungsform ist die Antriebseinheit 48 an einer Außenseite 52 des Maschinenkörpers 24 schwenkbar und axial verschiebbar gehalten. Die Antriebseinheit 48 umfasst hierzu eine Konsole in Form eines Halteschlittens 54, der eine Tragplatte 56 aufweist. Der Servomotor 26 ist auf der Tragplatte 56 angeordnet und die Tragplatte 56 ist über einen vorderen Haltearm 58 und einen hinteren Haltearm 60 drehfest an einer oberen Führungsstange 62 gehalten, die parallel zur ersten Getriebewelle 32 ausgerichtet und mittels zweier Lagerböcke 64, 66 linear verschiebbar und um ihre Längsachse 68 verschwenkbar gehalten ist.

An der Unterseite der Tragplatte 56 ist im Bereich ihrer dem Maschinenkörper 24 abgewandten Außenkante 70 eine untere Führungsstange 72 gehalten, die parallel zur oberen Führungsstange 62 ausgerichtet ist und die sich über ein vorderes Kolben-Zylinderaggregat 74 und ein hinteres Kolben-Zylinderaggregat 76 an der Außenseite 52 des Maschinenkörpers 24 abstützt.

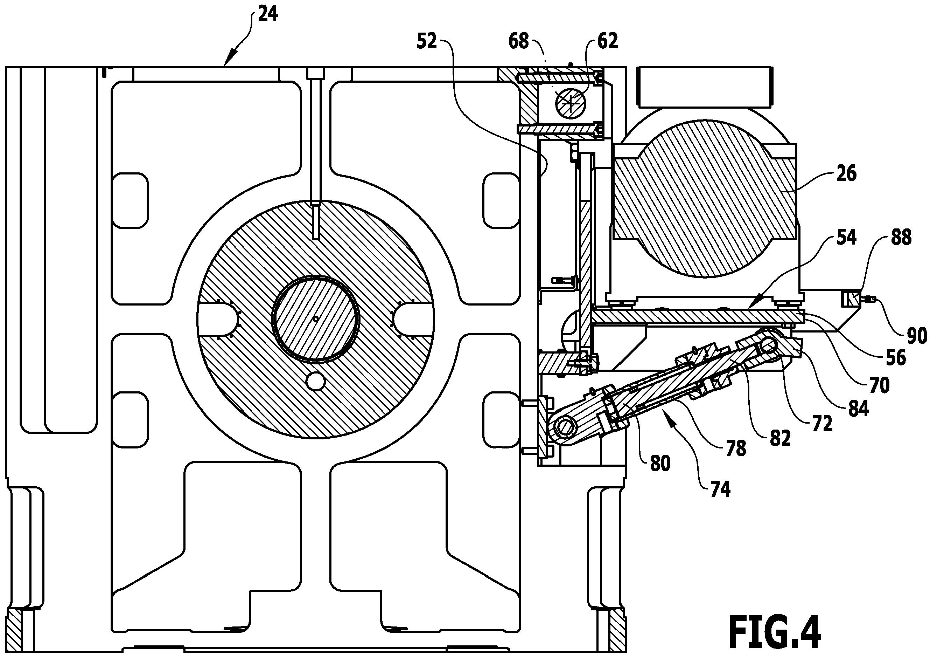

Die Kolben-Zylinderaggregate 74 und 76 sind identisch ausgebildet. Sie umfassen jeweils einen Zylinder 78, in dem ein Kolben 80 verschieblich gelagert ist. Eine starr mit dem Kolben 80 verbundene Kolbenstange 82 ragt aus dem Zylinder 78 hervor und ist über einen Schwenkkopf 84 mit der unteren Führungsstange 72 verbunden. Durch Beaufschlagen der Kolben-Zylinderaggregate 74, 76 mit einer unter Druck stehenden Hydraulikflüssigkeit können die Kolbenstangen 82 und die daran festgelegten Schwenkköpfe 84 nach außen bewegt werden, so dass die komplette Antriebseinheit 48 um die Längsachse 68 der oberen Führungsstange 62 aus einer inneren Schwenkstellung, wie sie in den Figuren 4, 5 und 6 dargestellt ist, in eine äußere Schwenkstellung verschwenkt wird. In der äußeren Schwenkstellung ragen die Schwencköpfe 84 jeweils in eine Schwenkkopfaufnahme 86 ein, die in eine Traverse 88 eingeformt ist. Die Traverse 88 ist ortsfest an der Außenseite 52 des Maschinenkörpers 24 gehalten. Eine der beiden Schwenkkopfaufnahmen 86 umfasst einen ersten Lagesensor 90, der über eine in der Zeichnung zur Erzielung einer besseren Übersicht nicht dargestellte Sensorleitung mit der in der Zeichnung ebenfalls nicht dargestellten Steuereinheit verbunden ist. Vom ersten Lagesensor 90 wird an die Steuereinheit ein Sensorsignal übertragen, wenn die Schwenkkopfaufnahme 86 den zugeordneten Schwenkkopf 84 des hinteren Kolben-Zylinderaggregates 76 aufnimmt. Die Steuereinheit erhält somit ein Signal, das anzeigt, dass die Antriebseinheit 48 ihre ausgeschwenkte Position eingenommen hat.

Fluchtend zur oberen Führungsstange 62 ist an der Außenseite 52 des Maschinenkörpers 24 ein weiteres Kolben-Zylinderaggregat 92 gehalten, das mit einer Kolbenstange 94 an einer Stirnseite der oberen Führungsstange 62 angreift. Auch das Kolben-Zylinderaggregat 92 kann mit unter Druck stehender Hydraulikflüssigkeit beaufschlagt werden. Dies hat zur Folge, dass die obere Führungsstange 62 und mit dieser die komplette Antriebseinheit 48 kollinear zur Längsachse 68 der oberen Führungsstange 62 verschoben wird.

Das Kolben-Zylinderaggregat 92 umfasst einen zweiten Lagesensor 96 und einen dritten Lagesensor 98, mit denen die vordere bzw. die hintere Axialstellung der Antriebseinheit 48 erfassbar ist. Hierzu wird mittels der Lagesensoren 96 und 98 die Lage der Kolbenstange 94 des Kolben-Zylinderaggregates 92 in der vorderen bzw. hinteren Endstellung erfasst.

Mit Hilfe des vorderen Kolben-Zylinderaggregates 74 und des hinteren Kolbenzylinder-Aggregates 76 kann die Antriebseinheit 48 um die Längsachse 68 der oberen Führungsstange 62 verschwenkt werden, und mit Hilfe des axial zur oberen Führungsstange 62 ausgerichteten Kolben-Zylinderaggregates 92 kann die Antriebseinheit 48 zwischen einer hinteren Axialstellung und einer vorderen Axialstellung hin- und her bewegt werden.

An der zweiten Getriebewelle 38 ist eine Bremse 100 gehalten, die an einem Gehäuse 102 des Schaltgetriebes 28 abgestützt ist. Mittels der Bremse 100 lässt sich die zweite Getriebewelle 38 und damit auch die Exzenterwelle 12 drehfest arretieren.

Nimmt das Schaltgetriebe 28 die in Figur 2 dargestellte erste Schaltstufe ein, so kämmt das erste Zahnrad 34 mit dem dritten Zahnrad 40. Die Antriebseinheit 48 ist hierbei in der inneren Schwenkstellung und der hinteren Axialstellung angeordnet. Vor einem Übergang in die zweite Schaltstufe wird zunächst die zweite Getriebewelle 38 mittels der Bremse 100 arretiert. Die Drehwinkelstellung der Motorwelle 30 und damit auch die Drehwinkelstellung des ersten Zahnrades 34 und des zweiten Zahnrades 36, die drehfest mit der ersten Getriebewelle 32 verbunden sind, wird durch Sensoren des Servomotors 26 erfasst. Derartige Sensoren sind in den Servomotor 26 integriert und in der Zeichnung zur Erzielung einer besseren Übersicht nicht dargestellt. Zum Übergang in die zweite Schaltstufe werden nun die beiden Kolben-Zylinderaggregate 74, 76 mit unter Druck stehender Hydraulikflüssigkeit beaufschlagt, so dass die Antriebseinheit 48 in ihre äußere Schwenkstellung verschwenkt wird. Die Schwenkköpfe 84 tauchen hierbei in die zugeordneten Schwenkkopfaufnahmen 86 ein. Dies wird vom ersten Lagesensor 90 detektiert, der daraufhin der Steuereinheit ein Sensorsignal bereitstellt, das anzeigt, dass die Antriebseinheit 48 ihre äußere Schwenkstellung eingenommen hat. Anschließend wird die Antriebseinheit 48 mittels des Kolben-Zylinderaggregates 92 in die vordere Axialstellung verschoben, so dass das zweite Zahnrad 36 seitlich neben dem dritten Zahnrad 40 angeordnet ist. Der zweite Lagesensor 96 stellt der Steuereinheit ein Steuersignal bereit, das anzeigt, dass die Antriebseinheit 48 ihre vordere Axialstellung eingenommen hat. Aufgrund der definierten Zahnlage des ersten Zahnrades 38 und des zweiten Zahnrades 36 und der zuvor erfassten Drehwinkelstellung der Motorwelle 30 kann die Steuereinheit die zum Eingreifen des zweiten Zahnrades 36 in das dritte Zahnrad 40 erforderliche Drehwinkelstellung berechnen. Die Motorwelle 30 wird dann in die berechnete Drehwinkelstellung verdreht und anschließend wird die Antriebseinheit 48 mittels der Kolben-Zylinderaggregate 74, 76 in die innere Schwenkstellung zurückgeschwenkt, so dass nunmehr das zweite Zahnrad 36 mit dem dritten Zahnrad 40 in Eingriff steht. Die Bremse 100 kann dann gelöst werden, so dass die Antriebseinrichtung 10 in der zweiten Schaltstufe des Schaltgetriebes 28 betrieben werden kann. Der Umschaltvorgang von der zweiten Schaltstufe zurück in die erste Schaltstufe erfolgt in umgekehrter Reihenfolge.

Der Übergang zwischen den beiden Schaltstufen des Schaltgetriebes 48 erfolgt somit ohne zusätzliche bewegbare Schaltelemente. Für einen Umschaltvorgang ist es lediglich erforderlich, die Antriebseinheit 48 um die Längsachse 68 der oberen Führungsstange 62 zu verschwenken und in Richtung der Längsachse 68 zu verschieben. Das Schaltgetriebe 28 zeichnet sich durch ein geringes Trägheitsmoment aus. Dies verleiht der Antriebseinrichtung 10 eine sehr hohe Dynamik.

## Patentansprüche

1. Antriebseinrichtung für einen Press-, Stanz- oder Umformautomaten (14), umfassend einen Antriebsmotor (26) mit einer Motorwelle (30) und ein Schaltgetriebe (28), wobei das Schaltgetriebe (28) einen ersten Getriebeabschnitt (46) aufweist mit einer ersten Getriebewelle (32), die mit der Motorwelle (30) verbunden ist und an der ein erstes und ein zweites Zahnrad (34, 36) angeordnet sind, wobei der Antriebsmotor (26) wahlweise über das erste oder über das zweite Zahnrad (34, 36) mit einer Exzenterwelle (12) des Press-, Stanz- oder Umformautomaten (14) koppelbar ist, und wobei der Antriebsmotor (26) zusammen mit dem ersten Getriebeabschnitt (46) eine Antriebseinheit (48) ausbildet, die zwischen einer ersten und einer zweiten Koppelstellung hin- und her bewegbar ist, wobei in der ersten Koppelstellung das erste Zahnrad (34) mit einem dritten Zahnrad (40) des Schaltgetriebes (28) kämmt und wobei in der zweiten Koppelstellung das zweite Zahnrad (36) mit dem dritten Zahnrad (40) kämmt, **dadurch gekennzeichnet, dass** die Antriebseinheit (48) elektrisch, pneumatisch und/oder hydraulisch, zwischen der ersten und der zweiten Koppelstellung hin- und her bewegbar ist und die Drehwinkelstellung des ersten und des zweiten Zahnrades (34, 36) steuerbar ist.

2. Antriebseinrichtung nach Anspruch 1, **dadurch gekennzeichnet, dass** die Antriebseinheit (48) bezogen auf die erste Getriebewelle (32) in separaten Bewegungsschritten radial und axial bewegbar ist.

3. Antriebseinrichtung nach Anspruch 1 oder 2, **dadurch gekennzeichnet, dass** die Antriebseinheit (48) bezogen auf die erste Getriebewelle (32) axial verschiebbar und um eine parallel zur ersten Getriebewelle (32) ausgerichtete Schwenkachse (68) verschwenkbar ist.

4. Antriebseinrichtung nach Anspruch 3, **dadurch gekennzeichnet, dass** die Antriebseinheit (48) eine Konsole (54) aufweist, an der der Antriebsmotor (26) gehalten ist, wobei die Konsole (54) um die Schwenkachse (68) verschwenkbar und kollinear zur Schwenkachse (68) verschiebbar ist.

5. Antriebseinrichtung nach einem der voran stehenden Ansprüche, **dadurch gekennzeichnet, dass** die Antriebseinheit (48) bezogen auf die erste Getriebewelle (32) in axialer Richtung zwischen einer vorderen und einer hinteren Axialstellung hin und her bewegbar ist, wobei der vorderen und/oder der hinteren Axialstellung mindestens ein Lagesensor (96, 98) zugeordnet ist.

6. Antriebseinrichtung nach Anspruch 5, **dadurch gekennzeichnet, dass** die Antriebseinheit (48) um eine parallel zur ersten Getriebewelle (32) ausgerichtete Schwenkachse (68) zwischen einer inneren und einer äußeren Schwenkstellung hin und her schwenkbar ist, wobei zumindest einer Schwenkstellung ein Lagesensor (90) zugeordnet ist.

7. Antriebseinrichtung nach Anspruch 6, **dadurch gekennzeichnet, dass** die Antriebseinheit (48) nur in ihrer äußeren Schwenkstellung in axialer Richtung bewegbar ist.

8. Antriebseinrichtung nach einem der voran stehenden Ansprüche, **dadurch gekennzeichnet, dass** der Antriebsmotor ein Servomotor (26) oder ein Torquemotor ist.

9. Antriebseinrichtung nach einem der voran stehenden Ansprüche, **dadurch gekennzeichnet, dass** die erste Getriebewelle (32) kollinear zur Motorwelle (30) ausgerichtet und mit dieser drehfest verbunden ist.

10. Antriebseinrichtung nach einem der voran stehenden Ansprüche, **dadurch gekennzeichnet, dass** das Schaltgetriebe (28) einen zweiten Getriebeabschnitt (50) aufweist mit einer zweiten Getriebewelle (38), an der das dritte Zahnrad (40) gehalten ist.

11. Antriebseinrichtung nach Anspruch 10, **dadurch gekennzeichnet, dass** an der zweiten Getriebewelle (38) ein viertes Zahnrad (42) gehalten ist, das mit einem drehfest mit der Exzenterwelle (12) verbundenen fünften Zahnrad (44) kämmt.

12. Antriebseinrichtung nach Anspruch 10, **dadurch gekennzeichnet, dass** das dritte Zahnrad (40) mit einem drehfest mit der Exzenterwelle (12) verbundenen Zahnrad in Eingriff steht.

13. Antriebseinrichtung nach Anspruch 10, 11 oder 12, **dadurch gekennzeichnet, dass** die zweite Getriebewelle (38) parallel zur ersten Getriebewelle (32) und/oder parallel zur Exzenterwelle (12) ausgerichtet ist.

14. Antriebseinrichtung nach einem der Ansprüche 10 bis 13, **dadurch gekennzeichnet, dass** der zweite Getriebeabschnitt (50) eine Bremse (100) umfasst zum Arretieren der zweiten Getriebewelle (38).

15. Antriebseinrichtung nach Anspruch 14, **dadurch gekennzeichnet, dass** die Bremse (100) an der zweiten Getriebewelle (38) angeordnet ist.

## Claims

1. A drive means for an automatic pressing, punching or forming machine (14), comprising a drive motor (26) with a motor shaft (30) and a control gear mechanism (28), wherein the control gear mechanism (28) has a first gear-mechanism portion (46) with a first gear-mechanism shaft (32) which is connected to the motor shaft (30) and on which a first and a second gear wheel (34, 36) are arranged, wherein the drive motor (26) can be coupled with an eccentric shaft (12) of the automatic pressing, punching or forming machine (14) either via the first or via the second gear wheel (34, 36), and wherein the drive motor (26) together with the first gear-mechanism portion (46) forms a drive unit (48) which can be moved back and forth between a first and a second coupling position, wherein in the first coupling position the first gear wheel (34) meshes with a third gear wheel (40) of the control gear mechanism (28), and
wherein in the second coupling position the second gear wheel (36) meshes with the third gear wheel (40), **characterised in that** the drive unit (48) can be moved electrically, pneumatically and/or hydraulically back and forth between the first and the second coupling position and the angle-of-rotation position of the first and of the second gear wheel (34, 36) is controllable.

2. A drive means according to Claim 1, **characterised in that** the drive unit (48) can be moved radially and axially in separate movement steps relative to the first gear-mechanism shaft (32).

3. A drive means according to Claim 1 or 2, **characterised in that** the drive unit (48) can be displaced axially relative to the first gear-mechanism shaft (32) and can be pivoted about a pivot axis (68) oriented parallel to the first gear-mechanism shaft (32).

4. A drive means according to Claim 3, **characterised in that** the drive unit (48) has a bracket (54) on which the drive motor (26) is held, the bracket (54) being able to be pivoted about the pivot axis (68) and able to be displaced colinearly to the pivot axis (68).

5. A drive means according to one of the preceding claims, **characterised in that** the drive unit (48) can be moved back and forth between a front and a rear axial position relative to the first gear-mechanism shaft (32) in the axial direction, with at least one position sensor (96, 98) being associated with the front and/or the rear axial position.

6. A drive means according to Claim 5, **characterised in that** the drive unit (48) can be pivoted back and forth between an inner and an outer pivoted position about a pivot axis (68) oriented parallel to the first gear-mechanism shaft (32), with a position sensor (90) being associated with at least one pivoted position.

7. A drive means according to Claim 6, **characterised in that** the drive unit (48) can be moved in the axial direction only in its outer pivoted position.

8. A drive means according to one of the preceding claims, **characterised in that** the drive motor is a servomotor (26) or a torque motor.

9. A drive means according to one of the preceding claims, **characterised in that** the first gear-mechanism shaft (32) is oriented colinearly with the motor shaft (30) and is connected non-rotatably thereto.

10. A drive means according to one of the preceding claims, **characterised in that** the control gear mechanism (28) has a second gear-mechanism portion (50) with a second gear-mechanism shaft (38), on which the third gear wheel (40) is held.

11. A drive means according to Claim 10, **characterised in that** a fourth gear wheel (42) is held on the second gear-mechanism shaft (38), which gear wheel meshes with a fifth gear wheel (44) connected non-rotatably to the eccentric shaft (12).

12. A drive means according to Claim 10, **characterised in that** the third gear wheel (40) is engaged with a gear wheel connected non-rotatably to the eccentric shaft (12).

13. A drive means according to Claim 10, 11 or 12, **characterised in that** the second gear-mechanism shaft (38) is oriented parallel to the first gear-mechanism shaft (32) and/or parallel to the eccentric shaft (12).

14. A drive means according to one of Claims 10 to 13, **characterised in that** the second gear-mechanism portion (50) comprises a brake (100) for locking the second gear-mechanism shaft (38).

15. A drive means according to Claim 14, **characterised in that** the brake (100) is arranged on the second gear-mechanism shaft (38).

## Revendications

1. Dispositif d'entraînement pour un automate d'usinage par pressage, découpage ou formage (14), comprenant un moteur d'entraînement (26) avec un arbre de moteur (30) et une boite de transmission à changement de vitesses (28), dispositif
dans lequel la boite de transmission à changement de vitesses (28) présente un premier secteur de boite de transmission (46) comprenant un premier arbre de transmission (32), qui est relié à l'arbre de moteur (30) et sur lequel sont agencées une première et une deuxième roue dentée (34, 36),
dans lequel le moteur d'entraînement (26) peut être couplé à un arbre à excentrique (12) de l'automate d'usinage par pressage, découpage ou formage (14), sélectivement par l'intermédiaire de la première ou de la deuxième roue dentée (34, 36), et
dans lequel le moteur d'entraînement (26) forme en commun avec le premier secteur de transmission (46), une unité d'entraînement (48), qui peut être déplacée en va-et-vient entre une première et une deuxième position de couplage,
dans lequel, dans la première position de couplage, la première roue dentée (34) engrène avec une troisième roue dentée (40) de la boite de transmission à changement de vitesses (28), et
dans lequel, dans la deuxième position de couplage, la deuxième roue dentée (36) engrène avec la troisième roue dentée (40),
**caractérisé en ce que** l'unité d'entraînement (48) peut être déplacée en va-et-vient entre la première et la deuxième position de couplage, par voie électrique, pneumatique et/ou hydraulique, et la position angulaire de rotation de la première et de la deuxième roue dentée (34, 36) peut être commandée.

2. Dispositif d'entraînement selon la revendication 1, **caractérisé en ce que** l'unité d'entraînement (48), en se référant au premier arbre de transmission (32), est mobile radialement et axialement selon des pas de mouvement séparés.

3. Dispositif d'entraînement selon la revendication 1 ou la revendication 2, **caractérisé en ce que** l'unité d'entraînement (48), en se référant au premier arbre de transmission (32), peut coulisser axialement et peut pivoter autour d'un axe de pivotement (68) orienté parallèlement au premier arbre de transmission (32).

4. Dispositif d'entraînement selon la revendication 3, **caractérisé en ce que** l'unité d'entraînement (48) comprend une console (54) sur laquelle est maintenu le moteur d'entraînement (26), la console (54) pouvant pivoter autour de l'axe de pivotement (68) et pouvant coulisser de manière colinéaire à l'axe de pivotement (68).

5. Dispositif d'entraînement selon l'une des revendications précédentes, **caractérisé en ce que** l'unité d'entraînement (48), en se référant au premier arbre de transmission (32), peut être déplacée en va-et-vient dans la direction axiale, entre une position axiale avant et une position axiale arrière, au moins un capteur de position (96, 98) étant associé à la position axiale avant et/ou arrière.

6. Dispositif d'entraînement selon la revendication 5, **caractérisé en ce que** l'unité d'entraînement (48) peut pivoter en va-et-vient entre une position de pivotement intérieure et extérieure, autour d'un axe de pivotement (68) orienté parallèlement au premier arbre de transmission (32), un capteur de position (90) étant associé à au moins une position de pivotement.

7. Dispositif d'entraînement selon la revendication 6, **caractérisé en ce que** l'unité d'entraînement (48) ne peut être déplacée dans la direction axiale que dans sa position de pivotement extérieure.

8. Dispositif d'entraînement selon l'une des revendications précédentes, **caractérisé en ce que** le moteur d'entraînement est un servomoteur (26) ou un moteur-couple.

9. Dispositif d'entraînement selon l'une des revendications précédentes, **caractérisé en ce que** le premier arbre de transmission (32) est orienté de manière colinéaire à l'arbre de moteur (30) et y est lié de manière fixe en rotation.

10. Dispositif d'entraînement selon l'une des revendications précédentes, **caractérisé en ce que** la boite de transmission à changement de vitesses (28) présente un deuxième secteur de boite de transmission (50) comprenant un deuxième arbre de transmission (38) sur lequel est maintenue la troisième roue dentée (40).

11. Dispositif d'entraînement selon la revendication 10, **caractérisé en ce que** sur le deuxième arbre de transmission (38) est maintenue une quatrième roue dentée (42), qui engrène avec une cinquième roue dentée (44) liée de manière fixe en rotation à l'arbre à excentrique (12).

12. Dispositif d'entraînement selon la revendication 10, **caractérisé en ce que** la troisième roue dentée (40) est en prise avec une roue dentée liée de manière fixe en rotation à l'arbre à excentrique (12).

13. Dispositif d'entraînement selon la revendication 10, 11 ou la revendication 12, **caractérisé en ce que** le deuxième arbre de transmission (38) est orienté parallèlement au premier arbre de transmission (32) et/ou parallèlement à l'arbre à excentrique (12).

14. Dispositif d'entraînement selon l'une des revendications 10 à 13, **caractérisé en ce que** le deuxième secteur de boite de transmission (50) comprend un frein (100) pour assurer l'arrêt du deuxième arbre de transmission (38).

15. Dispositif d'entraînement selon la revendication 14, **caractérisé en ce que** le frein (100) est agencé sur le deuxième arbre de transmission (38).
